# EUROPEAN PATENT APPLICATION

(11) **EP 4 435 732 A1**
(43) Date of publication of application: **25.09.2024**
(21) Application number: 23163396.7
(22) Date of filing: 22.03.2023
(51) Int. Cl.: G06V 10/82

(54) **CONDITION MONITORING FOR A STATE OF A CUTTING TABLE OF A LASER CUTTING MACHINE**

(71) Applicant: Bystronic Laser AG, 3362 Niederönz (CH)
(72) Inventor: LÜDI, Andreas, 3400 Burgdorf (CH); DERVISHAJ, Bardh, 2540 Grenchen (CH); Di PASQUALE, Nino, 3012 Bern (CH)
(74) Representative: Schwarz, Claudia

(57) **Abstract**

The present invention relates to a training method (T), a detection method (D) and a system (20) for detecting states of a support table (2) and in particular defects of the support table (2) of a sheet metal laser processing machine (18), by using a trained state detection network (sdnw). The optical sensor (1) is mounted above the support table (2), so that the optical sensor (1) and the support table (2) are movable with respect to each other. An output interface (200, 200', 200") is configured for providing a prediction result.

## Description

The present invention relates to field of laser cutting and automatic or digital monitoring of the state of a support table for a laser processing machine and in particular refers to a training method, a detection method for detecting state of the support table for or within a laser processing machine, a system for detecting the support table's state and a computer program.

In laser cutting, it is important to monitor the state of a support table in order to achieve high performance cutting results and/or high reliability of the laser processing machine or the overall system. The cutting table supports the workpiece also during cutting and may therefore be subject to wear and tear.

For example, if a workpiece, e.g. a sheet metal workpiece to be cut, is lying on a support table which is defective, this may lead to the effect that the planar workpiece is not fully and uniformly supported anymore by the support table which in the end may lead to impaired cutting results. For example, the support table may comprise a plurality of slats, each having a plurality of tips. All the tips of all slats are forming a two-dimensional plane as support structure. If one of these tips is e.g. burnt-off, due to wear and tear, the overall set of tips do no longer form an exact plane and this may lead to incorrect support and impaired cutting results.

While cutting, especially cutting of small pieces and/or holes above a such a support table with grid-like slats, it can happen, that small cut pieces, also called puzzle parts, can be welded onto the slat. After having finished the cut, the cut pieces are unloaded and sorted, then these welded puzzle parts cannot be removed and remain on the support table. Unfortunately, these puzzle parts can subsequently hinder to have a flat support for the metal sheets that follow, which can consequently lead to a bad cut. Even one single puzzle part on top of a slat can cause the workpiece sheet to tilt or even wiggle.

Another example situation which needs to be avoided relates to the situation where the melted metal and metal slag can adhere to the slats below the cut. After many cutting hours (especially flame-cutting) such melted metals and slags can accumulate to significant and disturbing slag accumulation, hinder to have a flat support, which can lead again to a bad cut. Slag accumulation can be even become that large that the gap between the slats are so much reduced, that the fork of a loading/unloading system can be hindered to load/unload the sheets.

Defects, like "welded parts", "slag accumulation" and "burnt-off tip" are mainly relevant for the cutting results, whereas the defects "pieces between slats", "bended and missing slats" are mainly relevant for the automation system, in particular an automated sorting and/or unloading system.

Therefore, it is necessary to monitor the state of the cutting table in order to provide high quality cutting results.

Further, it needs to be considered that machine development in general is striving to significantly increase machine autonomy so that production can be carried out with fewer personnel. Accordingly, the autonomous monitoring of machines, systems and processes must be constantly improved. Suitable sensor technology and intelligence are becoming more important. Flatbed cutting machines with their loading and unloading systems are also following this trend and should become more and more autonomous. In recent years, the cutting process in particular has become more autonomous, and cutting processes are increasingly running unmanned. Further, also the loading and unloading process of the cutting machine with sheet metal should also be improved with respect of autonomous monitoring. In particular, it should be possible to consider possible defects of the support table for loading/unloading or other accompanied processes, such as cleaning the support table. The detected state of the support table should be considered for these processes to control them appropriately. By contrast: For example, available cleaning systems today are not manless and/or are "blind" with respect to the support table's state (in particular with respect to wear and defects), possibly leading to inappropriate cleaning cycles and times (too long or too short). Also, renewal or replacement of the support table or its parts (e.g. its slats) should be executed appropriately, depending on the acutal support table's detected state (not unnecessarily too early and too late).

In state of the art, it is known to monitor the support table by means of sensors.

DE10 2019 104 649 A1 discloses a method for detecting the position of support bars or slats of a cutting table by means of a structured light and a camera.

Further WO 2021 185 899 A1 suggests to determine the actual geometry of the support protrusions (tips) of the support bars, using a light section method while a light line is scanned longitudinally across the table.

Finally, WO 2021 215 429 A1 addresses the wear of the cutting table too, by imaging in a first step the table before processing and in a second step after processing and compares the states of the table before and after processing to detect finer structural changes in the cutting table.

Beside the above-mentioned cutting table monitoring systems, several publications are known, addressing the cleaning and removal of slag and defects on cutting tables. These suggested systems, however, are working basically blind and without visual sensors. A slag-removal system is suggested e.g. in US 2007/0215250 A1.

A drawback of these systems is that it is not possible that the systems learn based on experience data.

JP 2021 171 786 A2 (Hit 8) discloses a camera-based detection of a support member with respect to a particular defect, namely slag accumulation, wherein the camera is fixed to the support table.

As described above, machines and their loading/unloading systems shall become more and more autonomous, requiring more and more sensors for condition monitoring and a respective intelligence.

Available cleaning systems today are not manless and/or are blind - leading to inappropriate (too long or too short) cleaning cycles and times.

A monitoring system that can detect wear and defects on the cutting table enables a purposeful cleaning of the table or replacement of the table or replacement of elements/slats of the table.

It is therefore an object of the present invention to provide a solution to improve the automatic detection of the state of a support table and to avoid the above-mentioned drawbacks of state of the art.

In a first aspect the present invention relates to a training method for training a neural network as a state detection network, in particular comprising at least one convolutional neural network, for detecting states of a support table and in particular defects of the support table of a laser processing machine, being a sheet metal laser processing machine. The method may comprise the following method steps:
- Receiving images from an optical sensor, which is mounted above the support table, so that the optical sensor and the support table are movable with respect to each other;
- Labelling the received images or parts thereof with labels to analyze a state of the support table, being represented in the received image;
- Using the state detection network, by inputting the labeled images or parts thereof and providing a class label detection and/or a prediction vector as result, wherein the result represents a state of the support table, namely a defective state or a normal state;
- During using the state detection network, incrementally adapting weights of the state detection network such that a loss function is minimized in order to provide a trained state detection network.

The sheet metal laser processing machine preferably is a flatbed laser processing machine, which in this application is also denoted in short as laser processing machine. The laser processing machine may be a laser cutting or drilling machine. The laser processing machine may be used for punching and/or engraving. It may be a flatbed laser cutting machine for processing planar or two-dimensional workpieces. The laser processing machine may be operated with a laser power of more than 1 kW and preferably in the range of 1 - 100 kW, and in particular 6 - 30 kW. The laser processing machine preferably may be part of a system. With other words, the system may comprise the laser processing machine. The system may comprise an automation system. The automation system may comprise an automatic sorting and/or loading/unloading system. The optical sensor may be attached to or mounted on the automation system or parts thereof and not be attached to the laser processing machine or its support table. The system, in particular the automation system, may comprise a rack, serving as gantry structure for a robotic arm. In one embodiment, the optical sensor may be attached to the robotic arm, being provided at the rack.

The workpieces may comprise metal or an alloy or synthetic materials or combinations thereof. The workpieces are flat sheet workpieces, in particular sheet metal workpieces.

The optical sensor may be or may comprise a camera, in particular a CMOS and/or a CCD camera. The optical sensor may be a 2D-camera. Alternatively or in addition, the optical sensor may be a 3D-camera, like stereo vision cameras, light field cameras, etc. The optical sensor has a field of view that covers preferably the whole width of the support table. Alternatively or in addition the optical sensor may have a field of view that covers at least a distance between each two slats of the support table or at least a third of the length of the support table. Especially for long support tables (e.g. in the range of 10 - 15 meters, in particular 12 meters) the field of view has to be selected appropriately. Typically, the field of view (FoV) is in the range of 1000x1000mm to 8000x8000mm and preferably 2000x2000mm. The FoV may be chosen in dependence of the length and width of the support table. At least the table width (1500mm / 2000mm) should be covered. It is to be noted, that the FoV does not necessarily have to be square. (For example a FoV of 2000x1000mm would work).

The optical sensor is positioned above the support table. The optical sensor is positioned such as facing the support table. The optical sensor is in data exchange with at least on (central) processing unit, wherein the (central) processing unit may inter alia be implemented in the laser processing machine, the automation system and/or a server-based processing unit.

The optical sensor is provided to be movable with respect to the support table.

In a first embodiment, the optical sensor itself is movable. In particular, it may be movable ifself or it may be attached or coupled to a system or part thereof, e.g. an automation system, which is movable with respect to the support table. Alternatively, the optical sensor may be mounted on a rack, in particular a frame rack, wherein the rack is positioned above the support table. The rack may comprise a horizontal bar extending along a longitudinal axis of the support table. The horizontal bar may cover at least most of the length of the support table. The optical sensor may be mounted on a slidable carrier, which is mounted on the bar. The optical sensor may be moved via the slidable carrier along the longitudinal direction of the bar. The longitudinal direction of the bar corresponds to the longitudinal direction of the support table.

In a second embodiment, the optical sensor may be provided in a fixed position (e.g. at the automation system) and the support table is movable, e.g. by translational movement in an horizontal plane, with respect to the optical sensor, e.g., camera. Alternatively or in addition the optical sensor is adapted such that received images, acquired by the optical sensor cover at least the whole width of the support table. Alternatively or in addition, the optical sensor is adapted such that not the whole width of the support table in covered by the field of view. In particular, a center processing zone of the workpiece to be processed may be covered, wherein the processing zone has a smaller width than the width of the support table.

Alternatively or in addition, the optical sensor is configured such as one shot (image acquisition) is sufficient for representing the complete support table.

Alternatively or in addition, only one single optical sensor may be used for image acquisition.

Alternatively or in addition, an optical sensor may be used which is already implemented in the laser processing machine or its environment. The environment of the laser processing system may in particular be an automation system, e.g. a sorting system and/or an (un)loading system. With other words, preferably, the camera or optical sensor may be used, which is already part of or implemented in the automation system.

The optical sensor may be placed inside a cutting cell of the laser processing machine, in particular at a ceiling of the cutting cell. The optical sensor is controlled to detect images in case the support table does not support a workpiece to be cut, so that the support table or a support table's structure may be detected with the optical sensor.

Alternatively, the optical sensor may be placed outside the cutting cell, monitoring the support table before new workpieces to be processed, e.g. metal sheets are loaded. The resolution and camera setting (including distance from the camera to the table) should be chosen, that a resolution down to 1-2 mm is feasible. In an embodiment a camera with effective resolution of 24MP (6000x4000) at a distance of 76 cm from the support table while using a lens with a focal length of 16mm may be used.

The support table may be a cutting table for supporting the workpiece, in particular during a cutting phase and when the workpiece is loaded on the support table (before cutting) and when it is unloaded therefrom (after cutting). The support table may be a shuttle table, which comprises of two table elements which are to be used in an alternating manner, wherein one element is inside the cutting cell when the other element is outside, with the cutting table elements alternating inside and outside. The one that is outside of the cutting cell is intended to be loaded and/or unloaded with workpieces, like e.g., metal sheets, and is intended to be imaged by means of the optical sensor, in particular in a time phase, when the support table is unloaded (no workpiece thereon and the slats of the support table are visible).

The support table may comprise a plurality of slats (also denoted as lamellas), arranged in parallel or in a sequence to form a two-dimensional supporting plane for the workpiece to be processed with the laser processing machine. The slats serve as support structure and may show a longitudinal length extension. The slats of the support table may include support structures, like teeth, extending upwardly. In an embodiment, the slats may be arranged essentially in parallel. Alternatively or in addition, the slats may show a curved length extension and may be positioned in sequence. The slats may be bent. In a side view, the slats may have a quasi-rectangular form, wherein the upper side may not be formed as line and/or may be formed with tips and/or according to a regular or irregular sawtooth shape. The tips are subject to wear and tear.

The neural network is a digital computational system for executing a specific task, like object detection and/or state detection with respect to the support table. In particular, the neural network serves to detect the support table's state. The neural network my be adapted for generating a prediction of support table's state, in particular its defects, like unintendedly welded parts, slag accumulation, burnt-off slat tips, parts between slats, bended or missing slats of the support table and/or others. The neural network in the form of the state detection network may comprise an object detection part and a classification part. In particular, detecting a welded part, burnt-off tips and pieces between slats of the support table is executed by means of applying or using a trained object detection network. Detecting or identifying slag accumulation, bended slats or missing slats is executed by means of applying or using a trained classification network.

The neural network is trained by a training method, in particular by a supervised training method (using labels) so that it may be provided as trained network and may be used or applied in this trained form in an inference phase. It has to be noted that in a preferred embodiment, the training of the state detection network and the application of the trained state detection network (in an inference phase) is preferably executed on different computing entities. The training may be executed on a central server. The central server may be in data connection to a set of laser processing machines. The inference may be executed on another computing unit, which may be provided locally in the environment of the laser processing machine, in particular on a coupled or integrated computer, e.g. a controller.

The neural network may be implemented as a convolutional neural network and an attention-based neural network, by merging convolution and self-attention. For more details, it is referred to "CoAtNet: Marrying Convolution and Attention for All Data Sizes", 15.9.2021, Zihang Dai, Hanxiao Liu, Quoc V. Le, Mingxing Tan, Google Research, Brain Team.

A major technical advantage of the CNN architecture is transformation equivariance, which makes it possible to leverage data augmentation techniques by using less input data for training, which is useful to better generalize to unseen cases (i.e. other or unseen states of the support table).

In an embodiment of the present invention, in particular for classification tasks, a CoAtNet architecture may be used for the state detection network. The state detection network as described herein, is provided in an un-trained state and in a trained state.

The CoAtNet architecture combines the advantages of CNN with those of attention mechanisms to process input data. The main features of the CoAtNet architecture include:
- Hybrid model: CoAtNet models combine convolutional layers, which are effective at capturing local features in the input data, with attention layers, which can capture long-range dependencies and relationships between features.
- Multi-stage architecture: CoAtNet models typically have a multi-stage architecture that consists of several blocks. Each block contains a combination of convolutional and attention layers, which allows the model to capture increasingly complex and abstract features at each stage.
- Feature fusion: CoAtNet models include a feature fusion block that combines the features learned from previous stages. This block helps the model learn a unified representation of the input data, which can improve performance on downstream tasks.
- Scalability: CoAtNet models can be scaled up or down to accommodate different computational resources and input data sizes. This scalability allows the models to be used in a wide range of applications, from small-scale tasks like image classification to large-scale tasks.
- Strong performance: CoAtNet models have achieved strong performance on a range of tasks, including image classification and object detection.

For using attention-based mechanisms, transformers are used (which are known to need much data in order to prevent from overfitting). In particular, in the CoAtNet architecture, transformers are used to compute attention weights between different regions of the input data. These attention weights are then used to combine the features from different regions in a weighted sum, which allows the model (network) to focus on the most relevant information for a given task.

By incorporating transformers into the CoAtNet architecture, the model is able to capture both local and global relationships between features in the input data, which can lead to improved performance on a range of tasks. Overall, the use of transformers in the CoAtNet architecture is one of its key features.

The CoAtNet architecture uses downsampling of the input images. The CoAtNet architecture may comprise 4 different stages or blocks:
1. A first stage with a single or multi layer network to downsample or scale down the input to lower resolution.
2. A second stage with one or more convolutional blocks;
3. A third stage with one or more transformer blocks with attention computation;
4. A fourth stage with a feature fusion block that combines the features learned from previous stages. Specifically, the fourth stage takes the output from the third stage and applies a series of convolutional and attention layers to learn a unified representation of the input data. The output of the fourth stage is typically passed to a final classification or regression layer to generate the model's predictions, in this case the support table's state (defective or non-defective).

The architecture shows an improved generalization capacity and in parallel also an improved model capacity. In particular, the model may be used with 2 or more conv and 2 or more transformer blocks. Preferably, the CoAtNet-0 is used. The CoAtNet architecture may comprise 2+2+3 convolutional blocks, followed by 5+2 transformer blocks.

As learning algorithm a gradient descent algorithm may be used to find the local smallest of a function, so that the Neural Network Algorithm converges to the local smallest. In particular, an adam optimization algorithm may be used. The adam optimization algorithm is an algorithm for first-order gradient-based optimization of stochastic objective functions, based on adaptive estimates of lower-order moments.

The loss function may be implemented as cross entropy loss. The cross-entropy between two probability distributions and over the same underlying set of events measures the average number of bits needed to identify an event drawn from the set if a coding scheme used for the set is optimized for an estimated probability distribution , rather than the true distribution

Generally, a training method (also called machine learning algorithm) may process a dataset that is used to train a neural network by means of using a machine learning algorithm. It consists of the sample output data (in this case: labels or labeled images) and the corresponding sets of input data that have an influence on the output (in this case: image data). The training method is used to run the input data through the algorithm to correlate the processed output against the sample output. The training method may comprise adapting weights of the neural network so that a loss function is minimized. This may be implemented by a gradient descent algorithm. Alternatively or in addition other iterative optimization algorithms may be applied.

Alternatively or in addition, detecting states of a support table is selected from the group consisting of:
- Detecting a welded part,
- Detecting burnt-off tips,
- Detecting pieces (also mentioned as "parts") between slats of the support table,
- Classifying slag accumulation,
- Classifying bended slats and
- Classifying missing slats.

Generally, detecting states of the support table refers to detecting a set of different defects or a normal (non-defective) state.

Detecting states may comprise detection of different states in parallel, like in particular, detection of a welded part on the support table (use case 1), burnt-off tips of a slat of the support table (use case 3), pieces or parts between the slats of the support table (use case 4), slag accumulation (use case 2), bended slats (use case 5) and/or missing slats (use case 6).

Detecting states may comprise object detection, e.g. wherein the object is or may comprise a welded part, a burnt-off tip and/or a slat, etc., as mentioned above.

Classifying refers to classify the detected state in different, preferably two classes (e.g., slag or no slag - slat is bended or slat is not bended - slat is missing or slat is not missing).

The result (also 'prediction result') is a digital dataset. The result may comprise a class label detection and/or a prediction vector. The result represents the state of the support table, being defective or normal. For an object detection part of the state detection network, the result may also comprise a position indication, representing information where the defect is located.

With object detection or when using the object detection network, a class label is output. In general, different objects can be detected with the same network. Thus, for each object which is detected or found, both the bounding box and the class label are output by an object detection network. The class label detection may be detection of a welded part for use case 1 (yes/no) or detection of pieces between slats for use case 4 (yes/no) or detection of a bent slat (lamella) in use case 5 (yes/no) or detection of missing slat(s) in use case 6 (yes/no). The prediction vector may comprise an object detection for e.g. a welded part (use case 1), or burnt-off tip (use case 3) or piece between slats (use case 4). The object detection may preferably comprise a position dataset.

Preferably, the prediction vector is only output for object detection networks. It contains the information of the bounding box (x, y, width, height) for each object found. Object detection networks are used in use case 1 (detection of welded parts), use case 3 (detection of burnt-off tips) and use case 4 (detection of pieces between slats).

The result, representing the detected state, irrespective whether it is classified or detected, may comprise a position dataset, representing where the defective state has been detected. For example, the position dataset may indicate the position, where the welded part is welded on the support table, in particular on the slat of the support table or where the slag is accumulated on the support table or its structure (e.g. slat).

The result may be provided as graphical representation, showing the support table and indicating therein the detected defective states (with position information).

Alternatively or in addition the result may be provided as textual representation, e.g. in the form of a message. The message may be provided on a user interface and/or may be forwarded by data communication means (e.g. network connection) to an external device (e.g. handheld or mobile device).

This is a major advantage of the solution presented herein, that different types of defective states may be indicated in one single method and/or in particular in one common representation, in particular graphical representation.

Alternatively or in addition in case the result indicates a defective state, a post processing algorithm may be applied. The post processing algorithm is adapted to calculate control instructions based on or in reply to the result.

The control instructions may be generated such that a cleaning module may be controlled with these control instructions to automatically clean the support table by removing elements in case a welded part or slag accumulation has been detected.

In case a burnt-off tip has been detected, the control instructions may serve to replace the defective slat or lamella with the defective tip with a new one.

In case a part or piece between slats of the support table has been detected, control instructions serve to remove the part. Removing the part may be executed automatically by means of using an unloading system and/or by a robot. Alternatively or in addition, removing the part may be executed manually.

Alternatively or in addition the control instructions may serve to control an unloading system, in particular issuing commands that neither the unloading system or parts thereof nor the workpiece or the cut parts are damaged due to the detected part between the slats of the support table. Alternatively or in addition, removing the part may be executed by means of cutting out the part by means of the laser processing machine. In this case control instruction may serve to control the laser processing machine to cut apart the detected piece between the slats in order to remove it therefrom.

The post processing algorithm may be adapted to issue a warning message, which may be forwarded to external devices, like the message of the result.

The post processing algorithm may be adapted to provide control instructions to control the laser processing machine in order to prevent cutting in regions which have been detected as defective. With other words the post processing algorithm may be adapted to modify the cutting plan, namely to use other regions of the workpiece which are not defective. The post processing algorithm may thus provide control instructions for the laser processing machine and/or a cleaning module (or machine).

Alternatively or in addition, the provided trained neural network is tested to avoid overfitting. With this, the adaption of the network to see new cases may be improved.

Alternatively or in addition, the labeled images are augmented prior to being applied in the neural network, wherein the augmentation is executed by an augmentation algorithm.

The data augmentation algorithm is an algorithm for providing additional input data, computed from the received image for data enrichment of training data. The data augmentation algorithm may use changing image parameters, selected from the group consisting of brightness, saturation, rotation, translation, zoom, color jitter, flipping, blur and contrast. Alternatively or in addition mosaic data augmentation algorithm may be applied, which generates a synthetical composite image from a set of received images.

Alternatively or in addition, labeling comprises graphically drawing a bounding box in the image, representing a defect or a defective region around the defect. The bounding box may be used in the object detection network or for object detection (task).

Preferably, the bounding box completely encompasses the defect, in particular a welded part (also called: welded puzzle piece). The bounding box preferably is rendered such that its sides are always parallel to the images x- and y-axis.

Alternatively or in addition, the support table comprises a set of slats arranged in sequence (one after the other without necessarily being parallel to each other) or in parallel.

For welded part detection, the prediction vector comprises coordinates of a predicted bounding box of each of a detected welded part and its width and height. The bounding box may be used in the object detection network or for object detection (task).

For welded part detection (use case 1), the state detection network may comprise or may be an object detection network.

The images, received from the optical sensor are labeled by a labeling algorithm. During labeling, the image is first loaded into the software and saved in a local repository. Afterwards, a human locates welded puzzle pieces on the image and draws a bounding box (in short: box) around each puzzle piece. Alternatively, this may be executed algorithmically. This box should fully encompass the puzzle piece and its sides are always parallel to the image's x and y-direction. After all puzzle pieces have been found and labeled, the software creates an .xml, .txt or .json file containing the information of the bounding boxes. This file may be downloaded and saved. The images may be cut from their original resolution of (6000x4000) pixels to a resolution of (1000x1000) pixels, which corresponds to the input resolution supported by the network used in this analysis. The resulting batch of small images mays then be augmented using data augmentation. For this use-case specifically, data augmentations which change the position of puzzle pieces in the image must be translated to the image's labels as well. These augmentation methods involve flipping, rotation and translation. The (labeled) images may be used as input for an object detection network. The output of an object detection network consists of a number defining the class label of the detection (in this case "Puzzle Piece" or welded part) as well as a prediction vector containing relevant spatial information of the predicted bounding box. This vector may consist of four elements which correspond to the bounding box's midpoint coordinates and the bounding box's width and height. For any given image, multiple predictions can be made by the network, each corresponding to a unique detection.

In all use case 1 to 6, which are explained herein, the images are labeled.

Alternatively or in addition, the support table comprises a set of slats arranged in parallel or in sequence. For slag accumulation detection (use case 2), the method comprises at least one of the following steps:
- Preprocessing the received image, wherein preprocessing at least comprise:
- Cutting each slat of the support table out of the received image;
- Cutting the processed image in a direction of a slat extension, in particular in a center between two peaks or according to a predefinable division scheme or pixel pattern, e.g. after a predefinable amount of pixels (e.g. cut after 128 pixels). The pixel pattern may be independent from the position of the tip in the image;
- Labeling the cut images in two classes, consisting of a dirty and a clean class;
- Using a data augmentation algorithm for data augmentation of the labeled images;
- Using a convolutional neural network and an attention-based neural network (CoAtNet) for providing a one-dimensional vector with two elements as an output, representing a clean class and a dirty class;
- Applying a softmax function to the output for providing a normalized result corresponding to a probability distribution;
- Thresholding the normalized result by applying a configurable thresholding value.

For slag accumulation detection (use case 2), the state detection network may comprise a classification network for classifying the states in two classes, a normal or clean class and a dirty class (with detected slag accumulation).

The binary image may be a black and white image or a dark grey and a light grey image.

In use case 2, namely for detection of slag accumulation, parts, in particular, cut parts, of the received image (e.g. "10cm pieces") are labeled.

Alternatively or in addition, cutting each slat of the support table out of the received image (in the image representation) is executed by:
- Converting it to a greyscale image and by applying a Fourier transformation on the greyscale image to further apply a masking operation to provide an intermediate image representation, wherein the masking operation is configured to differentiate between low and high frequency parts in the received image and then transforming the intermediate image representation back into a spatial domain of the received image to provide a processed image;
- Thresholding the processed image to provide a binary image;
- Analyzing each pixel in a row of the binary image and interpolating discrete values to provide a continuous function, wherein analyzing may be executed by summing all pixels in a row;
- Applying a peak finding algorithm on the provided continuous function, so that each peak in the continuous function corresponds to a slat of the support member in the received image;

Alternatively or in addition, the support table comprises a set of slats arranged in parallel or in sequence. Each slat has a plurality of tips, arranged in the longitudinal extension of the slat. For burnt-off tip detection (use case 3), the prediction vector comprises coordinates of a predicted bounding box of each of a detected burnt-off tip and its width and height. For use case 3 the same procedure may be executed as in use case 1.

For burnt-off tip detection (Use case 3) an object detection network is used. The state detection network may, thus, comprise an object detection network

A burnt-off state of a tip refers to a slat tip, wherein the tip is lost as it was burnt-off. The burnt-off state of a slat tip is different from slag accumulation. The burnt-off state of a slat tip may refer to a tip, where in particular upper parts of the tip are missing (are burnt away).

Alternatively or in addition, the support table comprises a set of slats arranged in parallel or in sequence in a predetermined distance. For detecting pieces between the slats of the support table, the prediction vector comprises coordinates of a predicted bounding box of each of a detected piece between the slats and its width and height. The method may comprise:
- Inputting the received images to the state detection network, which has been trained to find pieces between slats.

For detection of parts or pieces between slats (use case 4) an object detection network is used. The state detection network may, thus, comprise an object detection network.

Alternatively or in addition, the support table comprises a set of slats arranged in parallel or in sequence in a predetermined distance. For detecting bended slats and/or missing slats of the support table, the method may comprise:
- applying a Fourier transformation on the received image;
- cutting each slat out in the image and to input the cut-out slat in the state detection network, which has been trained to find a bended and/or missing slat of the support table.

For detecting bended slats (use case 5) and/or missing slats (use case 6) a classification task is applied. For detecting bended slats and/or missing slats a classification network may be used.

For detecting bended slats and/or missing slats the same procedure may be applied as in use case 2 (for detection of slag accumulation). In particular, a CoAtNet architecture may be used.

In another aspect, the present invention relates to a detection method for detecting states of a support table and in particular defects of the support table of a sheet metal laser processing machine, by using a trained neural network, in particular at least one trained convolutional neural network as state detection network, which has been trained with a training method as described above, comprising the following method steps:
- Receiving images from an optical sensor, which is mounted above the support table, so that the optical sensor and the support table are movable with respect to each other;
- Applying the trained state detection network based on the received images;
- Providing a prediction result of the application of the state detection network with a class label detection and/or a prediction vector.

The detection method preferably is executed on another computing unit as the training method.

The optical sensor, which is used in the detection method may be mounted at the automation system, in particular a loading/unloading and/or a sorting system.

Alternatively or in addition, the received images are subject to a cropping operation in order to adapt the received images in size and/or resolution to serve as admissible input in the trained state detection network.

Up to now, the invention has been described with respect to the claimed methods (training method and inference method). Dependent claims, features, advantages or alternative embodiments herein can be assigned to the other claimed objects (e.g. the computer program or the system or a computer program product) and vice versa. In other words, the system/apparatus can be improved with features described or claimed in the context of the method and vice versa. In this case, the functional features of the method are embodied by structural units of the apparatus or device or system and vice versa, respectively. Generally, in computer science a software implementation and a corresponding hardware implementation (e.g. as an embedded system) are equivalent. Thus, for example, a method step for "storing" data may be performed with a storage unit and respective instructions to write data into the storage. For the sake of avoiding redundancy, although the device may also be used in the alternative embodiments described with reference to the method, these embodiments are not explicitly described again for the device.

In another aspect the invention relates to a system for detecting states of a support table and in particular defects of the support table of a sheet metal laser processing machine, by using a trained state detection network, with:
- The sheet metal laser processing machine with the support table,
- An optical sensor, in particular at least one camera, which is mounted above the support table, so that the optical sensor and the support table are movable with respect to each other;
- A central processing unit, with:
   ∘ An interface to the trained state detection network, which has been trained with a method as described above;
   ∘ An output interface for providing a prediction result.

In a preferred embodiment, the system interacts or comprises an automation system.

The optical sensor may be a camera, as mentioned above, and/or may be mounted on the automation system. The automation system serves to process the cut parts. The automation system may be or may comprise a sorting system and/or a loading/unloading system. In particular, the optical sensor of the automation system may be used as optical sensor for the state detection network.

Preferably, the system, in particular but not necessarily the automation system, may comprise a rack. The rack may serve to support a robotic arm. The optical sensor may be attached to the robotic arm.

The optical sensor may preferably be movable with respect to the support table. Alternatively or in addition the support table is movable with respect to the optical sensor. The optical sensor may then be stationary or mounted in a fixed position.

The optical sensor may be mounted inside the laser processing machine. In this case the table must be empty (no workpiece thereon) passing underneath. Alternatively or in addition the optical sensor may be provided at or beside the cutting head. In particular, a camera, which is already mounted at or beside the cutting head may be used. The optical sensor is adapted to scan the whole support table. Alternatively or in addition the optical sensor may be provided on a frame of a loading/unloading system moving across the support table. Alternatively or in addition the optical sensor may be provided on a sorting system. The sorting system may be equipped with robot arms that can move over the support table.

The trained state detection network may be part of the system. In this case the state detection network is provided in a local storage of the system, which may be accessible via communications links (wired or non-wired). Alternatively or in addition, the state detection network may not be provided locally, but may be accessible via external communication links (e.g. WLAN or internet communications links).

Alternatively or in addition, the system may comprise an automation system and wherein the automation system is configured to be controlled in reply to control instructions, which may preferably based on or calculated from the provided prediction result, in particular by issuing a continuation signal for the automation system in case no defect at the support table has been predicted and by issuing an interruption signal for the automation system in case a defect has been predicted.

The continuation signal triggers a continuation of the system's processing (which may be: triggering a further workpiece to be loaded on the support table to be cut etc.). The interruption signal triggers an interruption of the system's processing. Alternatively or in addition the post processing algorithm may be executed.

The post processing algorithm is adapted to calculate control instructions based on or in reply to the prediction result. The control instructions may e.g. serve for controlling an automated cleaning system, in particular to clean where the defect has been detected.

Alternatively or in addition, the optical sensor is provided at or attached to an automation system.

Alternatively or in addition, the system is configured to automatically initiate a cleaning operation of the support table part, where a defect has been detected, in particular in case a slag accumulation and/or a welded part has been detected.

In another aspect the invention relates to a computer program being loadable into a memory unit of a computing unit, including program code sections to make the computing unit execute the method for training a state detection network as described above, when the computer program is executed in said computing unit.

In still another aspect the invention relates to a computer program being loadable into a memory unit of a computing unit, including program code sections to make the computing unit execute the detection method (inference phase) as described above, when the computer program is executed in said computing unit.

In another aspect the invention relates to a computer program product with a computer program as described above.

The computer program product may also be provided for download, e.g., via a radio or cellular network, the Internet and/or a host computer. Alternatively, or in addition, the method may be encoded in a Field-Programmable Gate Array (FPGA) and/or an Application-Specific Integrated Circuit (ASIC), or the functionality may be provided for download by means of a hardware description language.

In another aspect the invention relates to a computer-readable medium, on which program code sections of a computer program are stored or saved, said program code sections being loadable into and/or executable in a computing unit to make the computing unit execute the training and/or the detection method as described above, when the program code sections are executed in the computing unit.

In the context of the invention, a "computing unit" or "processor" may be understood to mean, for example, a machine or an electronic circuit. In particular, a processor may be a central processing unit (CPU), a microprocessor or a microcontroller, for example, an application-specific integrated circuit or a digital signal processor, possibly in combination with a memory unit for storing program instructions, etc. A processor may also be, for example, an IC (integrated circuit), in particular an FPGA (field programmable gate array) or an ASIC (application-specific integrated circuit), or e.g. a multi-chip module, e.g. a 2.5D or 3D multi-chip module, in which in particular several so-called dies are connected to one another directly or via an interposer, or a DSP (Digital Signal Processor) or a GPU (Graphic Processing Unit). A processor can also be a virtualized processor, a virtual machine or a soft CPU. It can also be, for example, a programmable processor which is equipped with configuration steps for carrying out the said methods according to the invention or is configured with configuration steps in such a way that the programmable processor implements the features according to the invention of the method, the component, the modules, or other aspects and/or partial aspects of the invention.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labelled with the same reference signs in different figures. In general, the figures are not for scale.

It shall be understood that a preferred embodiment of the pre-sent invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: shows according to an embodiment of a setup of the system according to the present invention;
- Fig. 2: depicts an exemplary schematic representation of a welded part on a slat;
- Fig. 3: shows a schematic representation of a section of the support table with an exemplary representation of slag accumulation and a bended slat;
- Fig. 4: shows in a schematic representation an example of burnt-off tips of a slat;
- Fig. 5: shows in a schematic representation an example of parts between slats;
- Fig. 6: depicts in a schematic representation an example the support table in interaction with an unloading/loading system for the sheet metal;
- Fig. 7: shows a structural overview of a structural workflow between hardware and software components according to an embodiment of the present invention;
- Fig. 8: is a workflow for image labeling;
- Fig. 9: shows a workflow for a training method for training a state detection network and a workflow for a detection method in an inference phase;
- Fig. 10: is workflow for finding a slat position in an image according to an embodiment of the present invention;
- Fig. 11: shows parts of a system for detecting the state of a support table in an example embodiment with an unloading and loading system for the laser processing machine;
- Fig. 12a: shows in an overview figure a loading and unloading system and sorting for a laser processing machine in a system according to an embodiment of the present invention, wherein the optical sensor is used and applied as a tool;
- Fig. 12b: shows in an overview figure a loading and unloading system and sorting for a laser processing machine in a system according to an embodiment of the present invention, wherein the optical sensor is fixed at a robot arm;
- Fig. 13: is an overview figure of a system according to several embodiments;
- Fig. 14: is a workflow for a training method for support table's state detection and
- Fig. 15: is a workflow for a detection method for support table's state detection.

### DETAILED DESCRIPTION OF THE DRAWINGS AND EMBODIMENTS

Any reference signs in the claims should not be construed as limiting the scope.

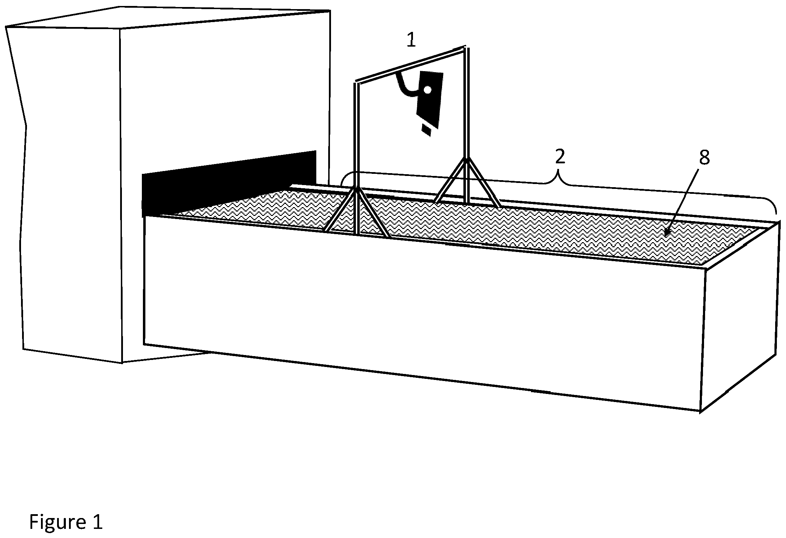

**Fig. 1** shows a structural representation of part of a system for detecting state of a support table 2 of a sheet workpiece laser processing machine 18 (in short: laser processing machine), in particular, a laser cutting machine. The support table 2, also mentioned herein as cutting table, may be a shuttle table which comprises two parts, one that may be moved in the cutting machine or cutting cell while the other one is out of the cutting cell to be loaded and unloaded with the sheet workpiece, in particular sheet metal.

The support table 2 comprises a plurality of slats 8, which may be arranged in parallel (as in the example case shown in Fig. 1) or which also may be bended or show a pattern and are arranged in sequence. The material of the slats 8 may be selected from the group consisting of: carbon steel, copper, brass, stainless steel, mild steel, aluminum and a metal alloy.

The support table is subject to wear and tear due the cutting process and may therefore show defects which can have an impact on future cutting quality.

The main defects on a support table 2 are selected from the group consisting of:
1. Detection of welded puzzle parts (use case 1),
2. Detection of slag accumulation (use case 2),
3. Detection of burnt-off slat tips (use case 3),
4. Detection of pieces or parts between slats (use case 4),
5. Detection of bended slats (use case 5) and
6. Detection of missing slats (use case 6).

These defects are detectable by means of the method or system, comprising: an optical sensor 1, in particular a camera, which is attached or mounted above the support table 2. The optical sensor 1 may be movable relative to the support table 2.

Further, the system comprises an interface to a trained state detection network, which has been trained to detect states of the support table automatically and with an output interface for providing the prediction result. The prediction result may comprise a class label detection (e.g. for use case 1: detected welded part/no detection of a welded part; use case 2: detection of slag accumulation/no detection of slag accumulation....and so on and so forth) and/or a prediction vector.

Generally, the state detection network as described herein, is provided in an un-trained state (which is still to be trained with a training method T) and in a trained state, which has been trained with the training method T and which may be applied in inference by means of a detection method D. In the figures and in the description, it is not differentiated by means of reference numerals between these two states (trained and un-trained form) and reference numeral sdnw is used for both types.

Figure 1 shows a preferred setup. A typical cutting machine usually has two cutting tables or a two-part cutting table, one or one part is inside the cutting cell and the other or the other one is outside, with the cutting tables or the cutting table parts alternating inside and outside. The one that is outside of the cutting cell is intended to be loaded and/or unloaded with metal sheets as workpieces to be cut. Ideally the camera is placed outside the cutting cell, monitoring the cutting table before new metal sheets are loaded. The resolution and camera setting (including distance from the camera to the table) should be chosen, that a resolution down to 1-2 mm is feasible. In our setup we used the Sony alpha 6300 camera with effective resolution of 24MP (6000x4000) at a distance of 76 cm from the cutting table while using a lens with a focal length of 16mm. Therewith 3 photos are exemplarily needed to monitor the complete 1.5 x 3m cutting table. Other resolutions for other sized cutting tables are of cause also in the range of this invention.

Principally, a normal 2D-camera is well suited for all the foreseen task, mentioned above. In other embodiments, however, also more complex 3D-cameras (stereo vision cameras, light field cameras, ...) could be used. Also, it is possible to use a video stream with an image sequence.

The laboratory camera support, shown in figure 1 is a first example of a possible embodiment. In the embodiment of Fig. 1 the camera is movable above the support table 2, which is stationary. In the embodiment of Fig. 1, the camera as an example of an optical sensor 1 is movable with respect to the support table 2. In the example embodiment, the camera or another optical sensor 1 is mounted on a rack above the support table 2. The optical sensor 1 may be movable by means of using a slidable carrier and the support table 2 is stationary. Alternatively, the optical sensor 1 is fixed in a position above the support table 2 and it is the support table 2, which may move with respect to the optical sensor.

The slats 8 of the support table 2 may extend in an axis, being parallel of a longitudinal extension of the support table 2. Alternatively, the slats 8 may have a longitudinal axis which is 90° rotated with respect to the longitudinal extension of the support table 2.

The longitudinal extension of the slats 8 may be parallel or rectangular to a bar on which the optical sensor 1 may be mounted. The bar may be part of a e.g. frame-like rack. The optical sensor may be mounted on a slidable carrier which moves along the bar of the rack.

Particularly suited would be a loading/unloading robot, at which the camera is mounted and which can move the camera above the table and could pick up the camera simply as a tool, when desired. Preferably, the camera is used, which is already integrated in the system, e.g. at an unloading/loading system.

The above-mentioned defects 1 - 3 mainly disturb the cut performance. For an optimal cut performance, the sheet support must be perfectly flat what is hindered when welded puzzle parts, big slag accumulation or burnt-off tips are present.

Defects 4 to 6, mentioned above-mentioned, rather disturb the automated loading/unloading system. This system is typically CNC controlled to enter with a fork-like element between the slats to load/unload sheets. When pieces are interlocked between grid slats or when grid slats are bended the entering of the fork is hindered. Where slats are missing, cut pieces tend to tilt and can affect the unloading fork.

In the following the different defects 1 - 6 are discussed in more detail.

### 1. defect:

While cutting, especially cutting of small pieces and/or holes above a slat, in particular a grid slat, it can happen, that small cut pieces, also called puzzle parts, can be welded onto the slat.

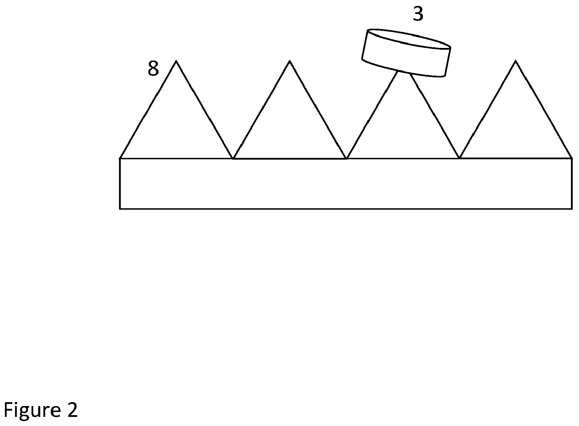

**Figure 2** shows a section of a cutting grid with a slat 8 in a side view with such a puzzle part 3 in a schematic representation. After having finished the cut, the cut pieces are unloaded and sorted. Then these welded puzzle parts can remain on the table. Unfortunately, these puzzle parts can subsequently hinder to have a flat support for the metal sheets that follow, which can lead consequently to a bad cut.

### 2. defect:

While cutting, especially flame-cutting, mainly above (grid) slats, the melted metal and metal slag can adhere to the slats below the cut. After many cutting hours such melted metals and slags can accumulate to significant and disturbing slag accumulation, hinder to have a flat support, which can lead again to a bad cut. Slag accumulation can be even become that large that the gap between the slats are so much reduced, that the fork of a loading/unloading system can be hindered to load/unload the sheets.

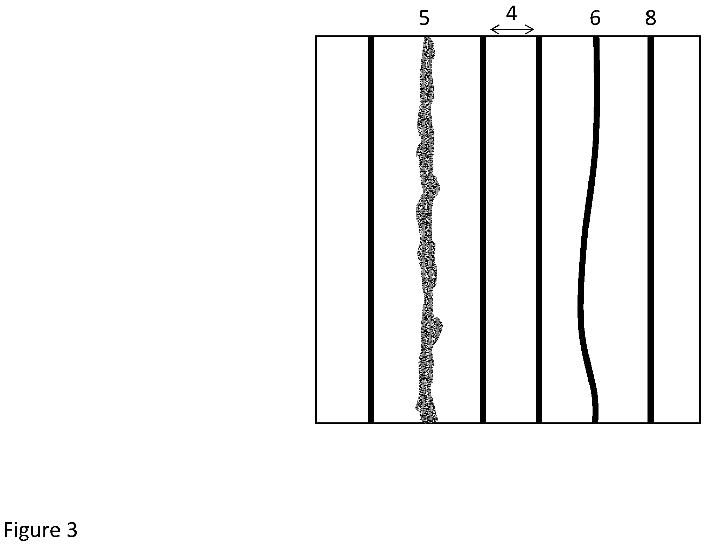

**Figure 3** shows in a schematic representation a section of a cutting table with the (grid) slats 8 with a defined distance 4 between the slats 8 and disturbing adhesive metal slag 5.

### 3. defect:

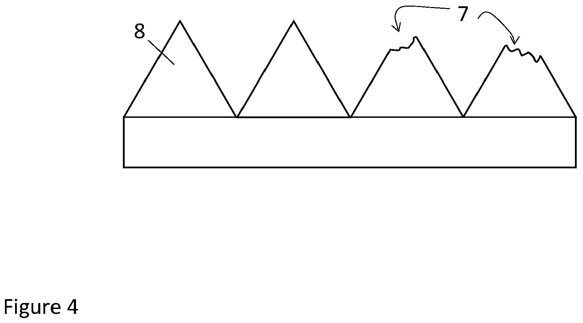

While cutting over slat tips, it can happen that the tips are burnt. Burnt tips or burnt-off tips 7 is exemplarily shown in **Figure 4****.** Burnt-off tips 7 can hinder to have a flat support, which can lead to a bad cut.

### 4. defect:

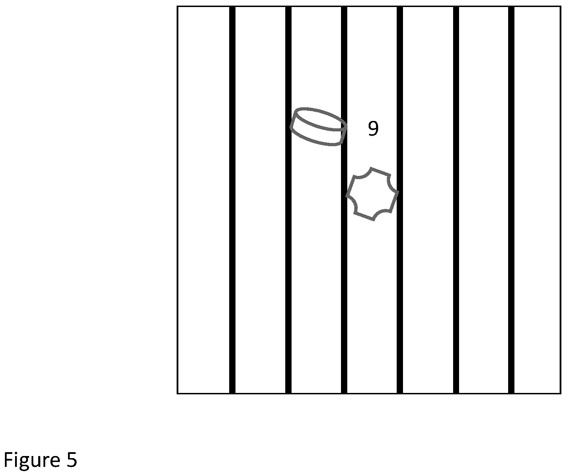

When sheet metal parts are cut in a cutting machine 18, cut pieces or parts of the cut workpieces can get between the slats 8. Often this already happens during cutting, in that a cut piece can tip off. It is also possible that cutouts are cut from workpieces that fall between the slats 8. Often, however, the pieces/objects do not fall completely through the cutting table 2 but remain stuck between the slats 8 or become trapped there. Such a stuck or trapped piece or object 9 This is schematically shown in **Fig. 5****.**

For the subsequent unloading of the cut pieces and/or the residual sheet metal, the stocked objects 9 between the slats 8 are unfavorable. This is because during an unloading process, a fork-like device 10 of an automated loading and unloading system is typically inserted between the grid slats to unload the cut sheet and/or the residual sheet from the cutting table 2.

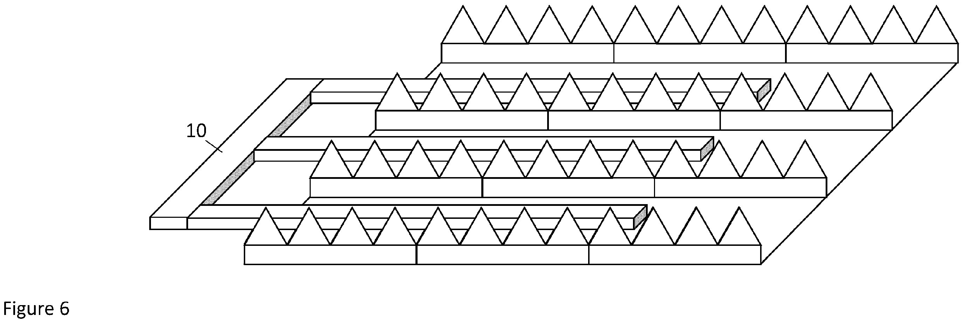

The fork-like device 10 is shown in **Figure 6** during an unloading operation (using the ByTrans as an example). If an object is now stuck between the slats 8, a collision with the fork-like device 10 occurs during unloading. This collision usually leads to a standstill or even a defect in the system.

### 5. defect:

Due to high heat exposure caused through the cutting process and/or also due to mechanical reasons, slats 8 can sometimes become bended.

Figure 3 shows an exemplarily bended slat 6. Such a bended slat 6 can again hinder the fork-like device 10 of an automatic loading and unloading system (not shown in Fig. 6) to properly load or unload metal sheets. The automatic loading and unloading system is known in the art and comprises controllers and actors, in particular for movement control of the fork-like device 10.

### 6. defect:

While cutting parts with laser cutting machines 18, the cut parts can sometimes be welded to the cutting table 2. Automated loading/unloading (removal) systems are usually capable of removing the parts even when they are welded to the support or cutting table 2. The high forces required to break the parts free from the cutting table 2 can lead to irreversible damage. This damage can accumulate over time and lead to a partial or full breaking of the slats 8. On the other hand, it is possible that the welded parts cannot be removed by the automated removal unit but instead, the whole (grid) slat (or parts thereof) is removed together with the welded part. Missing grid slats can severely hinder the machines cutting performance and can lead to unsatisfactory cutting results.

These six main defects, listed above, are automatically detected, and identified by means of the system and methods according to the present invention.

As these defects are stochastic in nature and always slightly different, an identification of these is ideally accomplished with artificial intelligence, more specifically with deep learning.

Deep neural networks act as a multidimensional global approximator that can learn any mapping from one high dimensional distribution to another.

This problem setup requires the use of multiple networks responsible for different computer visions tasks, namely Object Detection, Object Classification, Image Classification. The input for each network should either be a full resolution image, or a cropped region of the full image.

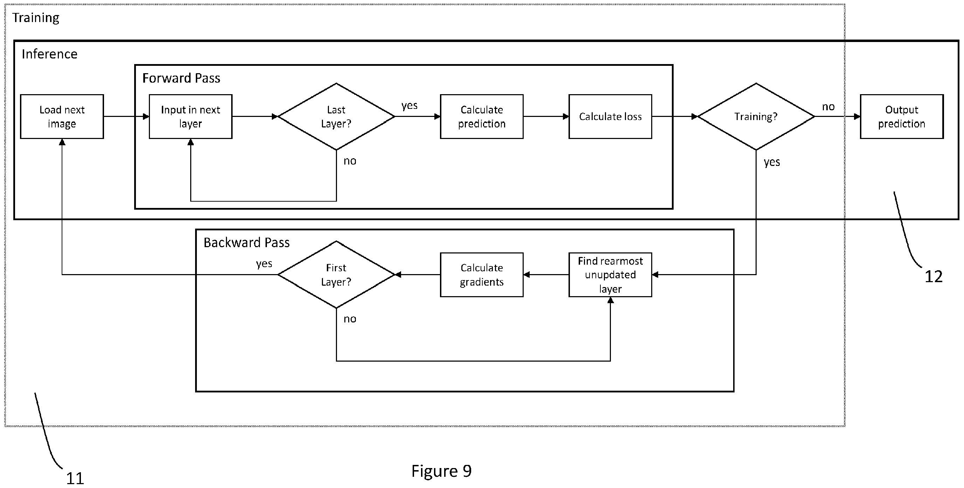

The process of working with deep learning consist of two main parts, namely training 11 and inference 12, which is depicted in **Figur 9**. Training of neural networks deserves special attention and is therefore discussed in more detail in the following section.

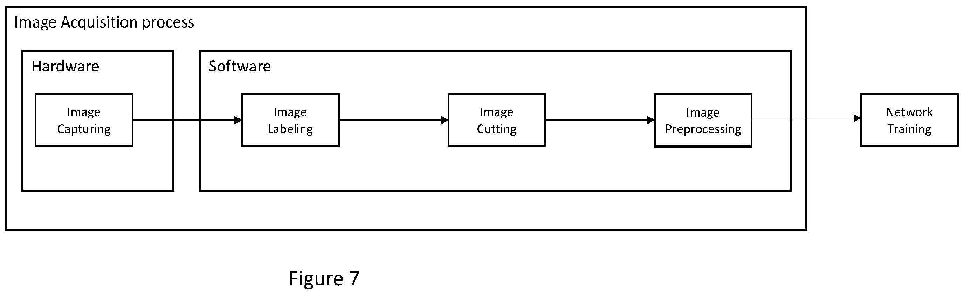

For training 11 as well as for inference 12 an image acquisition process is required, which is shown in **Figure 7**. The imaging hardware may comprise at least one optical sensor, like a camera. Preferably, the camera of the automation system 16, comprising a sorting system and/or loading/unloading system is used. After the image is acquired, software for preprocessing is applied, comprising labeling, cutting and/or image preprocessing. The preprocessed image is then subject to the training method.

A broad explanation of the procedure for any of these use-cases involves image capturing, image labeling, image preprocessing and network training. First an image is captured with a vision-based sensor 1 (in this case a 2D-Camera) after the metal sheet has been removed from the cutting table 2. This camera is placed above the cutting table 2 facing the table. The camera should be mounted in a way, that the camera's focal plane is parallel to the cutting table.

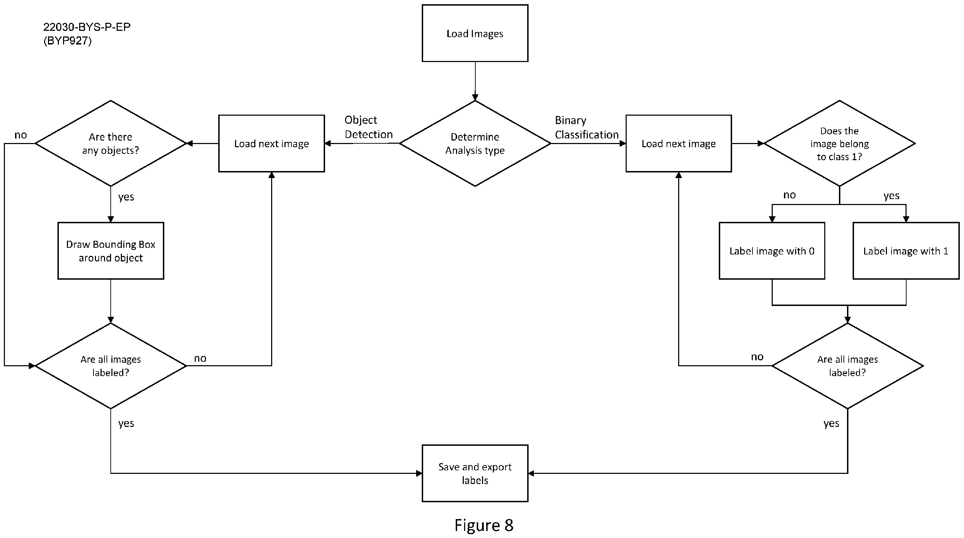

In a next step the captured images are labeled with the corresponding labels. **Figure 8** provides a more detailed visual representation of this process. Depending on the fact whether the images are processed for an object detection network or for a classification network, the labelling process is different. For object detection (e.g. welded part / use case 1), a bounding box is inserted around the detected object, encompassing the respective object. For image classification (e.g., slag accumulation / use case 2), the respective image is labeled with a binary class label (e.g., 1 for detection and 0 for non-detection).

Furthermore, the images are cut to have the resolution that the current network supports, and the individual cuts of the image are augmented using data augmentation. The data augmentation may be executed by means of a data augmentation algorithm and/or may consist of (small) changes in brightness, saturation, rotation, translation, zoom, color jitter, flip, and/or contrast, which are applied to the image. The data augmentations are selected by sampling different combinations following a uniform distribution. Here it is worth noting, that the data used in any application involves the use of different cutting tables 2 at different locations in different environments. Unifying this fact with data augmentation leads to a network which is robust against changes in environment and can hence be used on any cutting table anywhere. In the last step these images are used as input for the network's training. A visual representation of this process can be found in figure 7.

During network training the network will pass the image through its layers and learn to extract the semantic information of the image. This is repeated for each layer in the network until the information has been compressed such that it can be used as a prediction. A visual representation of this process can be found in **Figure 9****.**

This process can be further described by the fact that networks may be described in a simplified manner as a composition of numbers or network weights. These numbers are randomly sampled following a standard distribution. During training the network will incrementally change the values of certain numbers which changes the behavior of the network. If given enough data and training time, the model will be able to find the optimal numbers which lead to a full analysis of the input. In our case, the input is an image which is analyzed with either convolution-based or attention-based networks. During training the network will only use labeled data.

Labeling may comprise automatic or manual labeling. Labeling may be expressed by assigning labels to the image. The label depends on the use case. For example, for use case 1, the label may be "detected welded part (yes/no) - together with the bounding box" or for use case 2, the label may be "detected slag accumulation (yes/no)" etc.

After training has finished, the networks performance is measured by its accuracy on unseen data. When a satisfactory level of accuracy has been reached the weights of the network will be frozen and the network will be implemented in this frozen state.

In any application the network's weights will not be changed anymore. The network will be used as a pretrained tool for analysis of any cutting table.

In a preferred embodiment, the customers will not have access to the state detection networks' (also mentioned as model's) weights but will interact with the model via interfaces. The required computational power can either be provided locally by a computational unit or via cloud computing services such as Microsoft Azure or Google Cloud.

During inference 12 an image of the cutting table 2 is taken and cropped into the correct resolution. When inferring on any input (i.e. image of the support table 2), no labeling of the data is needed. The output of the state detection network is a prediction result, in the form of a class label detection and/or a prediction vector. The image crops are then input into the trained network, which predicts on the input. Since the weights of the network are frozen, the network will not use this data to update its weights. After the network has made a prediction on a given input, the next input can be fed into the network. From now on, the network can be used as a mapping tool that maps inputs to predictions.

For an even more detailed explanation of the training procedure the first two use-cases are explained in more detail in the following sections.

For the detection of use-case 1 (welded puzzle pieces), the whole cutting table is imaged by an imaging device, which is mounted above the cutting table and is facing the cutting table. These images are then labeled using the open-source labeling software labeling. During labeling, the image is first loaded into the software and saved in a local repository. Afterwards, a human locates welded puzzle pieces on the image and draws a box around each puzzle piece. This box should fully encompass the puzzle piece and its sides are always parallel to the image's x and y-direction. After all puzzle pieces have been found and labeled, the software creates an .xml, .txt or .json file containing the information of the bounding boxes. This file is then downloaded and saved. In a next step, the images are cut from their original resolution of (6000x4000) pixels to a resolution of (1000x1000) pixels, which corresponds to the input resolution supported by the network used in this analysis. The resulting batch of small images is then augmented using data augmentation. For this use-case specifically, data augmentations which change the position of puzzle pieces in the image must be translated to the image's labels as well. These augmentation methods involve flipping, rotation and translation. In a last step the images are used as input for an object detection network. The output of an object detection network consists of a number defining the class label of the detection (in this case "Puzzle Piece") as well as a prediction vector containing relevant spatial information of the predicted bounding box. This vector consists of four elements which correspond to the bounding box's midpoint coordinates and the bounding box's width and height. For any given image, multiple predictions can be made by the network, each corresponding to a unique detection.

For the analysis of use-case 2 (slag accumulation), the whole cutting table is imaged by an imaging device, which is mounted above the cutting table and is facing the cutting table.

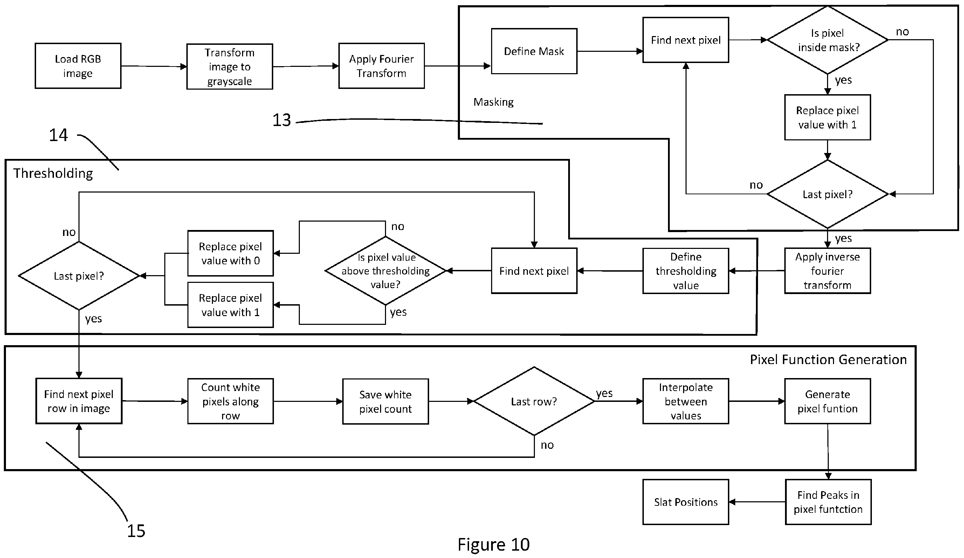

The analysis is performed by cutting each slat (also named as grid slat) out of the image. After each slat has been cut out, each of these images is again cut along its main direction, which yields small images that show different parts of the grid slats. To identify grid slats and to cut them out of an image, the slats have to be located in an arbitrary grid table image. This is done via fourier transform (shown in Fig. 10). The image is first converted from an RBG image to a grayscale image. In a next step, a fourier transformation is applied to the grayscale image which produces the image's fourier representation. Masking is applied to the fourier representation to suppress any low-frequency and high-frequency parts of the image. This is depicted in **Fig. 10** with reference numeral 13.

The image is then transformed back into the spatial domain, shown in Fig. 10 in the box, referenced with "apply inverse fourier transform". Here, the image only possesses medium-frequency parts, which are relevant to identify the grid slats. Subsequently, the image can now be thresholded, where a thresholding value is defined and any pixel with brightness value below the thresholding value is mapped to 0 while any pixel with brightness value above or equal to the thresholding value is mapped to 1. A detailed representation of the thresholding process is depicted with reference numeral 14 in Fig 10.

After the image has been thresholded, the image is present in binary form (black and white image). A pixel function generation may be applied, which is depicted in Fig. 19 with reference numeral 15. Here, for each horizontal pixel row, the white pixel count in that row is determined and plotted against the row index. Where the row index corresponds to the y-coordinate of the row (vertical) in pixel space. These discrete values are then interpolated to form a continuous function.

After this, a peak finding algorithm is applied to this continuous function, as shown in Fig. 10. Each peak in the function corresponds to a grid slat in the image. With this analysis grid slats can be found in an arbitrary support table's image. Following this analysis, these grid slat positions are used to cut out each grid slat from the image.

Furthermore, the images are cut along the main direction to create smaller parts of each grid slat.

In a next step, the images are labeled, e.g. by using the open-source labeling software LabelStudio. For this use-case specifically, the images were labeled in a binary fashion with "Clean" and "Dirty" being the only options.

In a next step, the images were augmented using a data augmentation algorithm and used as input for the classification network. The network takes (128x128)px images as input and hence all images were resized to fit this resolution. The network used in this analysis is "CoAtNet" which is a convolution- and attention-based network. The output of this network is a two-dimensional vector. Since the numbers of this prediction can range from minus infinity up to infinity, they must be mapped to values between 0-1 to correspond to a probability distribution. This mapping is done by applying SoftMax to the vector's values. After this mapping, each number corresponds to a probability prediction that the given image is of a specific class.

In a last step a thresholding value between 0.5-1 is defined and the prediction which is above the thresholding value is taken as the class predicted by the model. The thresholding value has no interaction with the underlying network and can be freely changed by customers to fit their desired predictive quality needs.

For the remaining use-cases 3 to 6, a short description of the detection process is stated in the following section.

When detecting burnt-off tips or heavily used tips (use-case 3) in an example embodiment, a Fourier transformation may be used to find the location of each slag tip. In a next step the slag tips should be cut out and used as input for a classification network which classifies the slag tip into condition-classes (e.g., defective class and non-defective class). Alternatively, if an object detection network is used, the labeling procedure may be executed similar to or analogously as in use case 1.

Pieces between slats (use-case 4) cause issues during manufacturing because they can hinder automated plate removal machines to remove the plate or sheet metal (see figure 6). Therefore, we suggest placing a camera (or another optical or vision sensor) on top of the cutting table 2 and facing the cutting table 2. The images taken by this camera system are used as input for an object detection network, which is trained to find objects between slats.

Use-cases 5 and 6 are analyzed together in the same procedure. Here, images are taken again from a camera mounted on top of the support table and facing the table. After the plate has been removed the camera will take images of the cutting table 2. Fourier analysis, like described in figure 10, is applied to these images to cut out each slat from the image. After that, these slats are input into a classification network which is trained to find bended or missing areas of the slat.

It has to be noted, that all the six different mentioned defect-types (use cases 1 to 6) can be identified with one and the same detector device, from the same images and one detection method.

Preferably, for the mounting of the optical sensor 1 an already existing system module, like an automation system, like e.g. a sorting system, is chosen. This provides a cost advantage. By moving the optical sensor 1 over the table 2, a high resolution of the imaged table is feasible with still a moderate camera performance.

The methods and system described above may be used for the detection of defects of the cutting table that prevent a good cut and/or that prevent collision with the loading/unloading system.

Alternatively or in addition, in case a defective state has been detected, a post processing algorithm may be executed. The post processing algorithm may be adapted to provide control instructions.

The control instructions may comprise control instructions for a subsequent laser cutting. In particular, in use cases 1 to 3, subsequent cutting processes may be controlled such that cutting is avoided above detected defects. Alternatively, cleaning process and/or a removal process may be initiated based on the control instructions. The control instructions may include positional information (defect position). The control instructions may, in particular, cause an automation system, like e.g. a sorting system or similar system, to clean dirt (welded puzzle/use case 1 or slag accumulation/ use case2) or to remove a detected piece between slats (stuck object) autonomously.

Alternatively or in addition, the control instructions may comprise control instructions for a loading/unloading system. For example, a loading/unloading system with a fork-type element may be used which is to engage with the support table in order to remove the cut parts and/or the rest of the workpiece from the table. The control instructions cause the fork-like device 10 (Fig. 6) of the loading/unloading system to disengage at least at the detected positions, where pieces between slats (use case 4) and/or bended slats (use case 5) have been detected. When applying these control instructions, it is assured that no collision occurs.

Alternatively or in addition, a warning message may be generated to indicate that the detected defect is to be troubleshooted and/or that the detected part (use case 4) or slat (use case 5) should be removed.

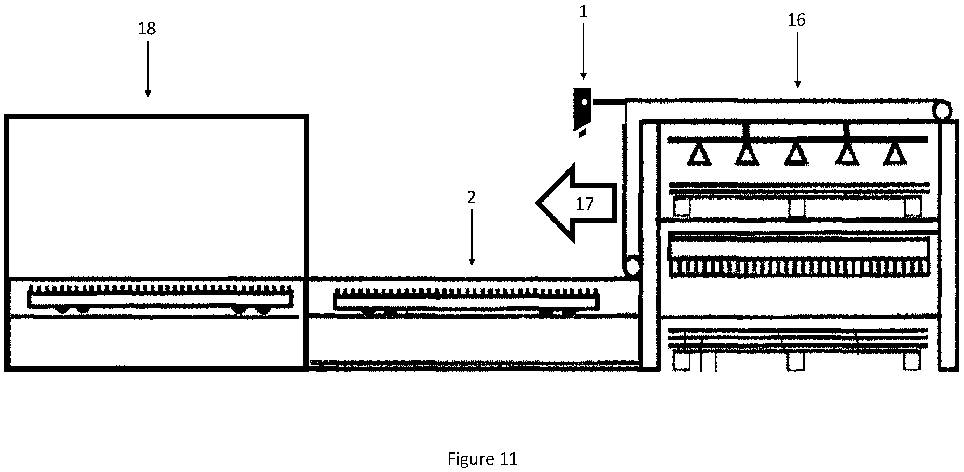

**Fig. 11** is a schematic representation of an example embodiment of a loading/unloading system 16 to be used for or with a laser processing machine 18. The loading/unloading system 16 is adapted to load and/or unload workpieces on and/or from the support table 2. The moving direction in Fig. 11 is indicated with reference numeral 17. The optical sensor 1 is attached to or positioned at the loading/unloading system 16 or parts thereof. It should be noted, that the exact orientation and position of the optical sensor 1 is preferably selected such that the field of view is corresponding to the whole support table 2 or at least to the width of the same.

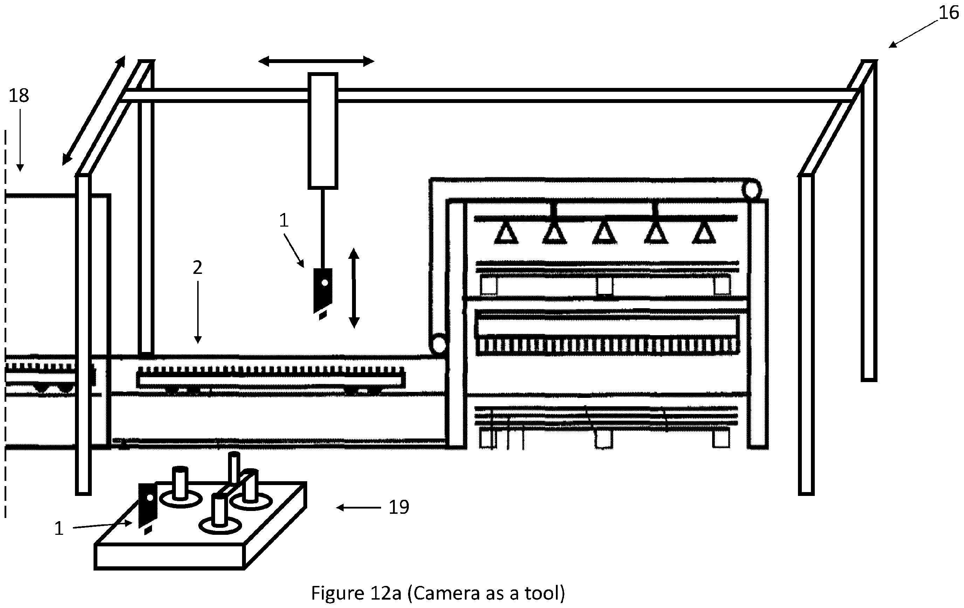

**Fig. 12a** is a schematic representation of a loading/unloading system 16 with sorting capability for a laser processing machine 18, wherein the optical sensor 1 is used and applied as a tool. The loading/unloading system 16 may be equipped with a tool storage unit 19. The tool storage unit 19 provides different tools to be used for the processing of the workpiece to be processed or for the already processed workpiece (e.g. cut parts). The tools may comprise grippers, like suction grippers or electromagnetic grippers with different shapes, sizes and/or distances between suction cups, or other tools. One of these tools may be an optical sensor 1. The optical sensor 1 may be provided in the tool storage unit 19 and thus the optical sensor may be provided as tool to be used in the system. The optical sensor 1 as tool is indicated in FIG. 12a by reference numeral 1. The tool storage unit 19 is located somewhere in the range of the robotic arms, preferably on the floor near the support table (as shown in the figure).

The system 20 according to claim 12 may comprise a rack r which may have a frame-like structure. The rack r may be configured to surround the support table 1 and/or the loading/unloading system 16. The rack r may comprise a bar b. The bar b is configured to support a robotic arm or a carrier c, on which the robotic arm is mounted. The carrier c may be slidable on the bar in the longitudinal direction of the bar b. Different tool may be chosen to be mounted on the robotic arm, including the optical sensor 1. By means of the slidable carrier c, the optical sensor 1, if mounted thereon, may be moved along the longitudinal direction of the bar b.

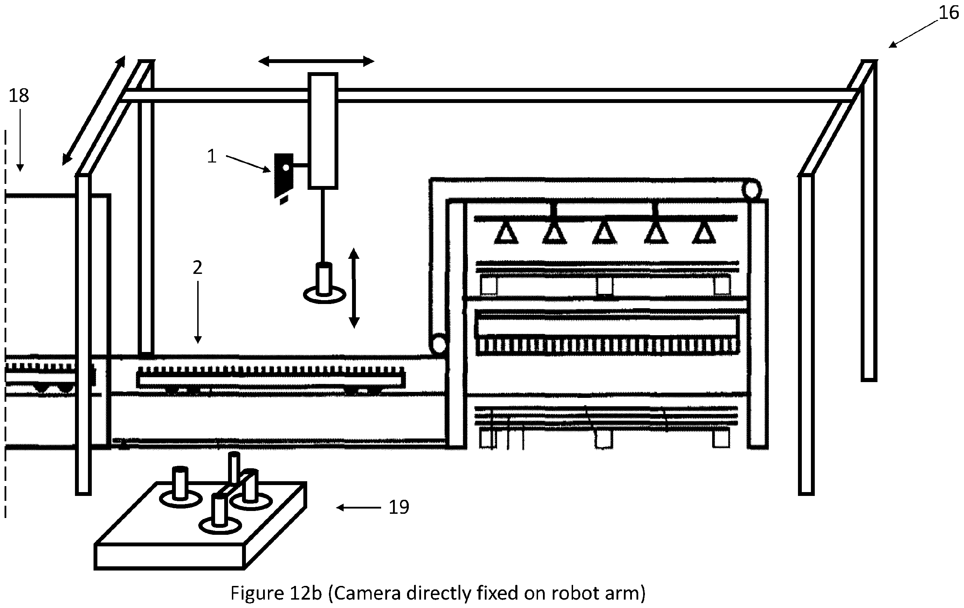

Alternatively or in addition, the optical sensor 1 may be provided in a fixed position at the robotic arm as shown in **Fig. 12b**. The optical sensor 1 may be directly fixed on the robotic arm, e.g. at a side surface thereof at a position, being low enough, so that the field of view of the optical sensor 1 is not impaired by the carrier c and/or the robotic arm (for avoiding occlusions).

The robotic arm may be mounted on a movable carrier c or bridge and can be moved in X and/or Y direction. The rack r serves as gantry structure for the robotic arm. Thus, preferably, a gantry robot is used. Important is that the robot arm(s) can reach all places of the support table 2. Sometimes, for productivity reasons, more than one robot arm is present. Preferably the robot should also reach a certain height above the support table 2, to allow for a field of view covering the whole width of the support table 2.

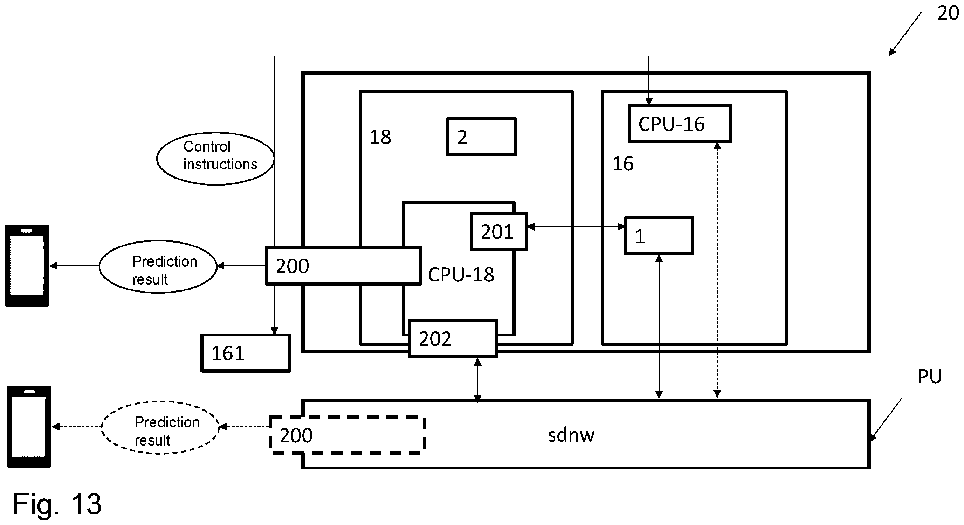

**Fig. 13** is a schematic representation of a system 20 for detecting states of a support table 2. The system 20 may comprise the laser processing machine 18 with the support table 2 and an automation system 16, like e.g. an automatic loading/unloading system and/or an automatic sorting system 161, which may be implemented as sorting robot. In preferred embodiments, the loading/unloading system and sorting system may be integrated in one common (e.g. robotic) system. The system 20 may comprise a rack r, providing a gantry for a set of different tools. One of these tools may be the optical sensor 1. The rack r may comprise a horizontal bar b for engagement with a slidable or movable carrier c for supporting a robotic arm, being equipped with a set of different tools.

The optical sensor 1, e.g. a camera, may be fixed or attached to the automation system 16. The optical sensor 1 is in data exchange with a central processing unit CPU-16 of the automation system 16, with a central processing unit CPU-18 of the laser processing machine 18 and/or with a processing unit PU which may be implemented on a central server.

The laser processing machine 18 comprises the central processing unit CPU-18 for machine control. Optionally, the automatic automation system 16 may comprise a dedicated central processing unit CPU-16 for machine control. The images may be forwarded to an input interface 201 of the central processing unit CPU-18 of the laser processing machine 18. The central processing unit CPU-18 may comprise an interface 202 to a state detection network sdnw, which may be provided on a processing unit PU.

In a training phase, the images from the optical sensor 1 may be forwarded directly to the processing unit PU for training the state detection network. The training of the state detection network sdnw may be executed on the processing unit PU, which preferably is provided externally to the laser processing system. The detection method (inference phase) may be executed locally, on the central processing unit CPU-18 of the laser processing machine 18 and/or on the central processing unit CPU-16 of the automation system 16. In the latter case, the central processing unit CPU-16 of the automation system 16 comprises an output interface (not depicted in Fig. 13) for providing the prediction result.

In still another embodiment, the sorting system 161 may comprise a further processing unit, which may be adapted to execute the inference phase and to provide the prediction result as well.

In an inference phase, the images from the optical sensor 1 may be forwarded to the processing unit PU as well as in the training phase, for providing a prediction result, which may be output via the output interface 200' of the processing unit PU. Alternatively the images may be forwarded to the central processing unit CPU-18 of the laser processing machine 18. The central processing unit CPU-18 of the laser processing machine 18 may access the state detection network sdnw with the received images or with pre-processed representations thereof, for providing a result.

In a first embodiment, the trained state detection network sdnw may be provided locally on the central processing unit CPU-18 of the laser processing machine 18. The prediction result may be provided via the output interface 200.

In a second embodiment, the trained state detection network sdnw may not be provided locally, but on the processing unit PU which is accessible via network connection between the processing unit PU and the central processing unit CPU-18 of the laser processing machine 18. In this case, the prediction result may be provided via the output interface 200' of the processing unit PU.

In a third embodiment, the trained state detection network sdnw may not be provided locally, but also on the processing unit PU which is accessible via network connection. However, compared to the second embodiment, in the third embodiment, the prediction result may be sent back to the central processing unit CPU-18 of the laser processing machine 18 to be provided "locally" via the output interface 200. Also the control instructions may be generated locally on the central processing unit CPU-18 of the laser processing machine 18 or on the processing unit PU or even on another computing unit.

The control instructions may be calculated on the basis of the prediction result. The control instructions may also comprise sections to control the loading/unloading system or another automation system or parts thereof. The prediction result may be provided on mobile devices, which are in network connection to the central processing unit CPU-18.

The control instructions may be calculated by means of applying a post-processing algorithm, which may be implemented on the processing unit PU, the central processing unit CPU-18 of the laser processing machine and/or on the central processing unit CPU-16 of the automation system.

Alternatively or in addition, the control instructions may serve to control the laser processing machine itself (e.g. for later cutting, not to cut over the defective positions), the automation system (e.g. not to engage in defective support table's positions) and/or a cleaning system (e.g. to clean in positions, where dirt, in particular in the form of slag residue, has been detected).

In a preferred embodiment, which is shown in Fig. 13, the processing unit PU may be provided on a cloud-based entity which is accessible via network access (local area network LAN or radio access network or based on an internet protocol connection). The processing unit PU may be external from the central processing unit CPU-18 of the laser processing machine 18 and/or external from the central processing unit CPU-16 of the automation system 16. The processing unit PU is configured for storing and/or executing the trained state detection network sdnw. The processing unit PU may be in data exchange with the central processing unit CPU-18 of the laser processing machine 18 and/or with the central processing unit CPU-16 of the automation system 16 (depicted as optional in Fig. 13 by means of the double arrow in hatched line).

Alternatively or in addition, the processing unit PU with the state detection network may be provided locally on the central processing unit CPU-18 of the laser processing machine 18. In the latter case, the state detection network sdnw is provided locally.

The central processing unit CPU-18 of the laser processing machine 18 may comprise an output interface 200 for providing a prediction result and/or control instructions. The control instructions are calculated on the basis of the prediction result and serve to control the automation system 16. For this purpose, the control instructions may be forwarded to a central processing unit of the automation system CPU-16.

The system 20 preferably comprises the laser processing machine 18 and the automation system 16. In another embodiment, the system 20 may only comprise the laser processing system 18 with its support table 2 and an optical sensor 1, which may be provided and positioned such that the optical sensor 1 and the support table 2 are movable with respect to each other (first option: optical sensor 1 is movable - second option: support table 2 is movable and optical sensor may be static).

The interfaces, mentioned herein may be internal or external interfaces.

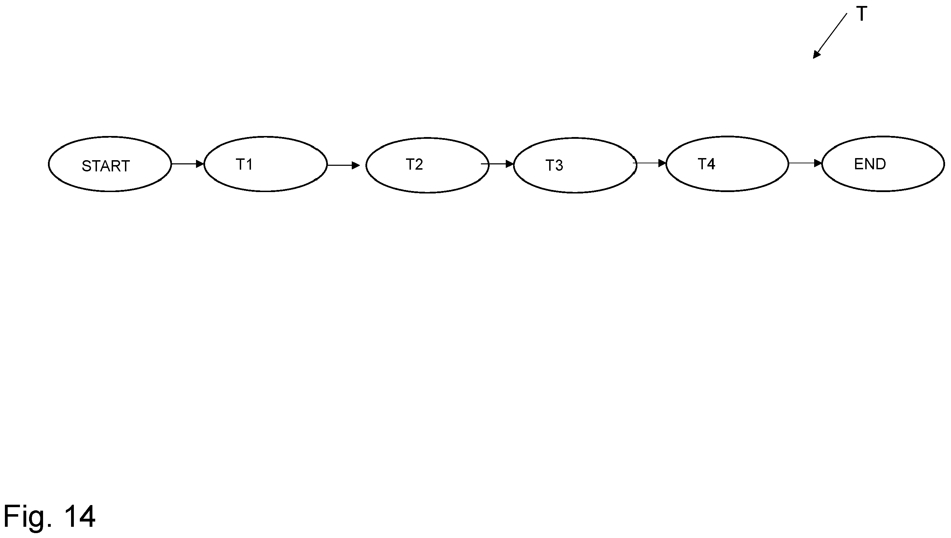

**Fig. 14** shows an example workflow of a training method T for training the state detection network sdnw. After having started the method, in step T1 images are received from the optical sensor 1, in particular a camera. The camera may be placed with the automatic automation system 16, which may be a loading/unloading or a sorting system. In step T2, the images are labeled by applying a labeling algorithm. Alternatively or in addition, the labeling may be executed manually.

In step T3 the state detection network sdnw is used or applied for providing a result. The result (also named herein "prediction result") may comprise a class label detection (normal state - defective state) and/or an prediction vector. The provided result is compared to the respective label. This results in a loss (high for a large difference between prediction result and label, and low for a small difference between prediction result and label) which is step by step reduced by updating the weights in the state detection network sdnw. The weights are updated by backpropagation and a gradient descent algorithm.

In step T4 the state detection network sdnw is provided in a trained form (with fixed weights). After this, the trained state detection network sdnw may be tested and may then be used in an inference phase. After this, the method may end.

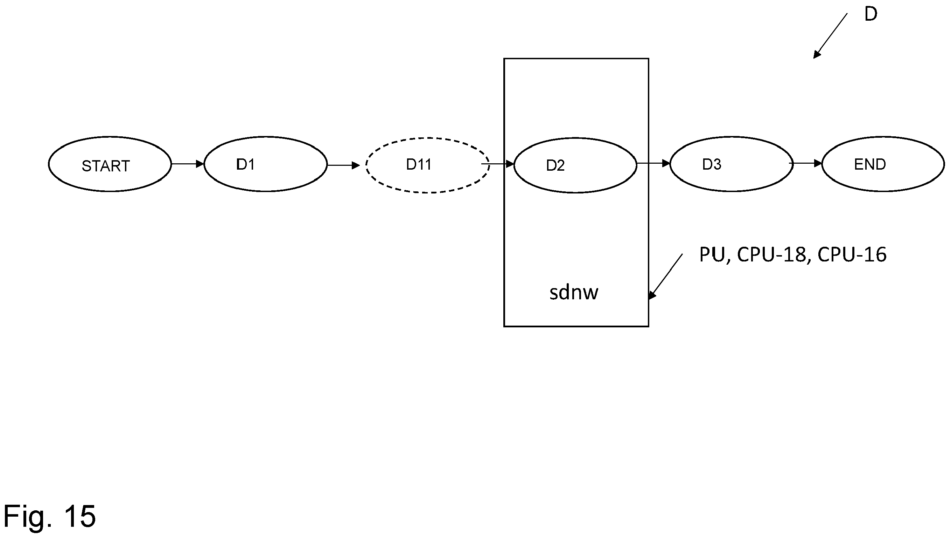

**Fig. 15** shows an example workflow of a detection method D. After having started the method, in step D1 images are received from the optical sensor 1, in particular a camera. The camera may be placed with the automatic automation system 16, which may be a loading/unloading or a sorting system. In step D11, which is optional, and which therefore, is depicted in Fig. 15 with hatched line, the received images may be cropped or pre-processed otherwise. In step D2 the state detection network sdnw is applied in a trained form based on the received images. In step D3 a prediction result is provided. After this, the detection method may end.

The trained state detection network sdnw may be provided on a processing unit PU, and/or on a central processing unit CPU-18, CPU-17. As explained above, the processing unit PU may be internal or external to the laser processing machine 18 and/or automation machine 16.

Wherever not already described explicitly, individual embodiments, or their individual aspects and features, described herein can be combined or exchanged with one another without limiting or widening the scope of the described invention, whenever such a combination or exchange is meaningful and in the sense of this invention, which is typically the case for computer-implemented inventions.

Advantages which are described with respect to a particular embodiment of present invention or with respect to a particular figure are, wherever applicable, also advantages of other embodiments of the present invention.

### List of reference numerals

1. Optical sensor, in particular camera
   - as separate tool
   - fixed on a robotic arm
2. Support table, in particular cutting table
3. Welded part (puzzle part)
4. Distance between grid slats
5. Accumulation of slag
6. Bended slat
7. Burnt-off tips
8. slat
9. Puzzle between grid slats (stuck object)
10. Fork-like device of a loading/unloading system
11.Training workflow
12. Inference workflow
13. Masking
14. Thresholding
15. Pixel Function Generation
16. Automatic automation system, in particular Loading and Unloading System
17. Moving direction of the Loading and Unloading system
18. Laser cutting machine
19. Tool storage for sorting system
20. System for state detection

- 161: automatic automation system, in particular sorting robot
- 200: output interface
- 201: input interface
- 202: interface to SDNW
- sdnw: state detection network
- CPU-18: Central processing unit of the laser processing machine
- CPU-16: central processing unit of the automation system
- PU: processing unit with a storage for a trained state detection network
- T: training method (training)
- T1: receiving images from optical sensor
- T2: labeiling images
- T3: using state detection network
- T4: providing trained state detection network

- D: detection method (inference)
- D1: receiving images from optical sensor
- D11: cropping the received images
- D2: applying a trained state detection network based on the received images
- D3: providing a prediction result

## Claims

1. A training method (T) for training a neural network as a state detection network (sdnw), in particular comprising at least one convolutional neural network, for detecting states of a support table (2) and in particular defects of the support table (2) of a laser processing machine (18), being a sheet metal laser processing machine, comprising the following method steps:
- Receiving (T1) images from an optical sensor (1), which is mounted above the support table (2), so that the optical sensor (1) and the support table (2) are movable with respect to each other;
- Labelling (T2) the received images or parts thereof with labels to analyze a state of the support table (2), being represented in the received image;
- Using (T3) the state detection network (sdnw), by inputting the labeled images or parts thereof and providing a class label detection and/or a prediction vector as result, wherein the result represents a state of the support table (2), namely a defective state or a normal state;
- During using the state detection network (sdnw), incrementally adapting weights of the state detection network (sdnw) such that a loss function is minimized in order to provide (T4) a trained state detection network (sdnw).

2. Training method (T) according to claim 1, wherein detecting states of a support table is selected form the group consisting of:
- Detecting a welded part,
- Detecting burnt-off tips,
- Detecting pieces between slats (8) of the support table (2),
- Classifying slag accumulation
- Classifying bended slats and
- Classifying missing slats.

3. Training method (T) according to any of the preceding method claims, wherein labeling comprises graphically drawing a bounding box in the image, representing a defect or a defective region around the defect.

4. Training method (T) according to any of the preceding method claims, wherein the support table (2) comprises a set of slats (8) arranged in sequence or in parallel and/or for welded part detection, the prediction vector comprises coordinates of a predicted bounding box of each of a detected welded part and its width and height.

5. Training method (T) according to any of the preceding method claims, wherein the support table (2) comprises a set of slats arranged in parallel or in sequence and/or for slag accumulation detection, the method comprises at least one of the following steps:
- Preprocessing the received image, wherein preprocessing comprises:
∘ Cutting each slat (8) of the support table (2) out of the received image;
∘ Cutting the processed image in a direction of a slat extension, in particular in a center between two peaks or according to a predefinable pixel pattern;
- Labeling the preprocessed images in two classes, consisting of a dirty and a clean class;
- Using a data augmentation algorithm for data augmentation of the labeled images;
- Using a convolutional neural network and an attention-based neural network, CoAtNet, for providing a one-dimensional vector with two elements as an output, representing a clean class and a dirty class;
- Applying a softmax function to the output for providing a normalized result corresponding to a probability distribution;
- Thresholding the normalized result by applying a configurable thresholding value.

6. Training method (T) according to claim 5, wherein cutting each slat (8) of the support table (2) out of the received image is executed by:
- Converting it to a greyscale image and by applying a Fourier transformation on the greyscale image to further apply a masking operation to provide an intermediate image representation, wherein the masking operation is configured to differentiate between low and high frequency parts in the received image and then transforming the intermediate image representation back into a spatial domain of the received image to provide a processed image;
- Thresholding the processed image to provide a binary image;
- Analyzing each pixel in a row of the binary image and interpolating discrete values to provide a continuous function;
- Applying a peak finding algorithm on the provided continuous function, so that each peak in the continuous function corresponds to a slat (8) of the support member in the received image;

7. Training method (T) according to any of the preceding method claims, wherein the support table (2) comprises a set of slats (8) arranged in parallel or in sequence and wherein each slat (8) has a plurality of tips and/or for burnt-off tip detection, the prediction vector comprises coordinates of a predicted bounding box of each of a detected burnt-off tip (7) and its width and height. and/or the method may comprise:
- Inputting the received images to the state detection network (sdnw), which has been trained to find burnt-off tips (7).

8. Training method (T) according to any of the preceding method claims, wherein the support table (2) comprises a set of slats (8) arranged in parallel or in sequence in a predetermined distance (4) and/or for detecting pieces between the slats (8) of the support table (2), the prediction vector comprises coordinates of a predicted bounding box of each of a detected piece between the slats (8) and its width and height and/or the method may comprise:
- Inputting the received images to the state detection network (sdnw), which has been trained to find pieces between slats (8).

9. Training method (T) according to any of the preceding method claims, wherein the support table (2) comprises a set of slats (8) arranged in parallel or in sequence in a predetermined distance (4) and/or for detecting bended slats (6) and/or missing slats of the support table (2), the method may comprise:
- applying a Fourier transformation on the received image;
- cutting each slat (8) out in the image and to input the cut-out slat in the state detection network (sdnw), which has been trained to find a bended slat (6) and/or missing slat of the support table (2).

10. Detection method (D) for detecting states of a support table (2) and in particular defects of the support table (2) of a sheet metal laser processing machine (18), by using a trained neural network, in particular at least one trained convolutional neural network as state detection network (sdnw), which has been trained with a training method according to any of the preceding training method claims, comprising the following method steps:
- Receiving (D1) images from an optical sensor (1), which is mounted above the support table (2), so that the optical sensor (1) and the support table (2) are movable with respect to each other;
- Applying (D2) the trained state detection network (sdnw) based on the received images;
- Providing (D3) a prediction result of the application of the state detection network (sdnw) with a class label detection and/or a prediction vector.

11. Detection method (D) according to the preceding detection method claim, wherein the received images are subject to a cropping operation (D11) in order to adapt the received images in size and/or resolution to serve as admissible input in the trained state detection network.

12. System (20) for detecting states of a support table (2) and in particular defects of the support table (2) of a sheet metal laser processing machine (18), by using a trained state detection network (sdnw), with:
- The sheet metal laser processing machine (18) with the support table (2),
- An optical sensor (1), in particular a camera, which is mounted above the support table (2), so that the optical sensor (1) and the support table (2) are movable with respect to each other;
- A central processing unit (CPU-18, CPU-16) with:
- An interface to the trained state detection network (sdnw), which has been trained with a method according to any of the preceding training method claims;
- An output interface (200, 200', 200") for providing a prediction result.

13. System (20) according to the directly preceding system claim, wherein the system (20) may comprise an automation system (16) and wherein the automation system (16) is configured to be controlled in reply to control instructions, calculated from the provided prediction result, in particular by issuing a continuation signal for the automation system (16) in case no defect at the support table has been predicted and by issuing an interruption signal for the automation system (16) in case a defect has been predicted.

14. System (20) according to any of the preceding system claims, wherein the system (20) comprises an automation system (16) and the optical sensor (1) is provided at or attached to the automation system (16).

15. System (20) according to any of the preceding system claims, wherein the system (20) is configured to automatically initiate a cleaning operation of the support table part, where a defect has been detected, in particular in case a slag accumulation and/or a welded part has been detected.

16. Computer program being loadable into a memory unit of a computing unit, including program code sections to make the computing unit execute the method for training (T) a state detection network (sdnw) according to any of claims 1 to 9, when the computer program is executed in said computing unit.

17. Computer program being loadable into a memory unit of a computing unit, including program code sections to make the computing unit execute the detection method (D) according to any of the claims 10 or 11, when the computer program is executed in said computing unit.
